(19) Europäisches Patentamt
European Patent Office
Office européen des brevets

(11) **EP 2 105 593 B1**

(12) **EUROPEAN PATENT SPECIFICATION**

(45) Date of publication and mention
of the grant of the patent:
**20.04.2011 Bulletin 2011/16**

(51) Int Cl.:
***F01N 3/28*** *(2006.01)*

(21) Application number: **08165492.3**

(22) Date of filing: **30.09.2008**

(54) **Exhaust gas treating apparatus and corresponding method of manufacturing.**

Abgasbehandlungsvorrichtung und entsprechendes Herstellungsverfahren

Appareil de traitement des gaz d'échappement et procédé de fabrication correspondant

(84) Designated Contracting States:
**AT BE BG CH CY CZ DE DK EE ES FI FR GB GR HR HU IE IS IT LI LT LU LV MC MT NL NO PL PT RO SE SI SK TR**

(30) Priority: **27.03.2008 JP 2008084611**

(43) Date of publication of application:
**30.09.2009 Bulletin 2009/40**

(60) Divisional application:
**11155573.6**

(73) Proprietor: **Ibiden Co., Ltd.**
**Ogaki-shi, Gifu 503-8604 (JP)**

(72) Inventor: **Saiki, Kenzo**
**Gifu 503-8559 (JP)**

(74) Representative: **HOFFMANN EITLE**
**Patent- und Rechtsanwälte**
**Arabellastraße 4**
**81925 München (DE)**

(56) References cited:
**EP-A- 0 574 012     US-A- 5 413 766**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

BACKGROUND OF THE INVENTION

1. Field of the Invention

The present invention relates generally to exhaust gas treating apparatuses and mat members used in exhaust gas treating apparatuses. More particularly, the present invention relates to an exhaust gas treating apparatus used for treating exhaust gas of a vehicle and a mat member used in such an exhaust gas treating apparatus.

2. Description of the Related Art

Conventionally, many exhaust gas treating apparatuses have been proposed and put to practical use. A typical exhaust gas treating apparatus includes an exhaust pipe communicating with an exhaust gas manifold of the engine. In the middle of the exhaust pipe, there is provided a casing made of, e.g., metal, and an exhaust gas treating body is provided inside the casing. The exhaust gas treating body has plural cells separated from one another by cell walls. These cells often have a honeycomb-like structure. If the exhaust gas treating body has a honeycomb-like structure, it is also referred to as a honeycomb structural body. Examples of an exhaust gas treating body are a catalyst carrier, an exhaust gas filter such as a diesel particulate filter (DPF), and the like. For example, if the exhaust gas treating body were a DPF, when the exhaust gas passes through the cells of the exhaust gas treating body, particulates would be captured by the cell walls due to the above configuration, and therefore the particulates can be removed from the exhaust gas.

Generally, an exhaust gas treating device is configured to have a mat member made of inorganic fiber provided between the exhaust gas treating body and the casing. This mat member prevents the exhaust gas treating body from breaking as a result of contacting the inside of the casing, which may occur while a vehicle is traveling. The mat member also prevents untreated exhaust gas from leaking through a gap between the casing and the exhaust gas treating body. The mat member also prevents the exhaust gas treating body from being displaced due to exhaust gas pressure. Furthermore, the mat member maintains the exhaust gas treating body at high temperature in order to maintain reactivity.

The mat member is wound around at least a part of the peripheral surface of the exhaust gas treating body, except for its openings, and is integrally fixed to the exhaust gas treating body with the use of taping or the like. Then, this integrated component is press-fitted inside the casing, thereby configuring an exhaust gas treating apparatus.

When the integrated component is press-fitted inside the casing, frictional force is generated between the external surface of the mat member and the internal surface of the casing. If the frictional force is large, the position of the mat member will be displaced with respect to the inside of the exhaust gas treating body and the outside of the casing, while the integrated component is being fitted inside the casing.

To mitigate such a problem, there has been proposed a technique of providing latex on both sides of the mat member, i.e., the surface of the mat member that contacts the internal surface of the casing and the other surface of the mat member that contacts the peripheral surface of the exhaust gas treating body (see patent document 1). With this technique, it is possible to control the frictional force that is generated between the mat member and the casing and the exhaust gas treating body when press-fitting the integrated component in the metal casing. Therefore, this technique facilitates the operation of press-fitting the integrated component.

Patent document 1: Japanese Laid-Open Patent Application No. 2005-74243

The positional displacement of the mat member with respect to the casing and/or the exhaust gas treating body does not only occur while manufacturing an exhaust gas treating apparatus.

For example, if the exhaust gas treating apparatus is arranged in the middle of an exhaust pipe of an engine, when the engine operates, exhaust gas of high temperature (for example, 1000 °C at maximum) will flow through the exhaust gas treating apparatus, and when the engine stops operating, the exhaust gas will stop flowing through the exhaust gas treating apparatus. Due to this change in temperature, the casing and the exhaust gas treating body of the exhaust gas treating apparatus expand and contract, and therefore the mat member repeatedly receives compression/ decompression loads in the radial direction of the exhaust gas treating body. Usually, the amount of damaged inorganic fiber included in the mat member increases due to repeatedly receiving such loads. Thus, the holding force of the mat member decreases with the passage of time. When the holding force of the mat member drops below a minimum holding force with respect to the exhaust gas treating body, the position of the mat member becomes displaced with respect to the metal casing and/or the exhaust gas treating body.

With respect to the mat member of patent document 1, the latex provided on both surfaces of the mat member entirely burns away due to the heat of the exhaust gas within a relatively short period of time after starting to use the exhaust gas treating apparatus. Thus, the holding force of the mat member of patent document 1 decreases with the passage of time after starting using the exhaust gas treating apparatus, just like any regular mat member.

Furthermore, when the position of the mat member is displaced, the above-described functions demanded of the mat member may not work.

## SUMMARY OF THE INVENTION

The present invention provides an exhaust gas treating apparatus, a method of manufacturing the exhaust gas treating apparatus, in which one or more of the above-described disadvantages are eliminated.

A preferred embodiment of the present invention provides an exhaust gas treating apparatus and a method of manufacturing the exhaust gas treating apparatus, in which the positional displacement of a mat member with respect to an exhaust gas treating body and a casing is mitigated, even after being used for a long period of time.

An embodiment of the present invention provides an exhaust gas treating apparatus including an exhaust gas treating body; a mat member including inorganic fiber, the mat member being wound around at least a part of a peripheral surface of the exhaust gas treating body; a casing configured to accommodate the exhaust gas treating body around which the mat member is wound; and a heating element configured to emit heat, the heating element being provided at least one of between the exhaust gas treating body and the mat member and between the mat member and the casing.

An embodiment of the present invention provides a method of manufacturing an exhaust gas treating apparatus including an exhaust gas treating body, a mat member including inorganic fiber, the mat member being wound around at least a part of a peripheral surface of the exhaust gas treating body, and a casing configured to accommodate the exhaust gas treating body around which the mat member is wound, the method including a heating element providing step of providing a heating element configured to emit heat, at least one of between the exhaust gas treating body and the mat member and between the mat member and the casing.

According to one embodiment of the present invention, an exhaust gas treating apparatus and a method of manufacturing the exhaust gas treating apparatus are provided, in which the positional displacement of a mat member with respect to an exhaust gas treating body and a casing is mitigated, even after being used for a long period of time.

## BRIEF DESCRIPTION OF THE DRAWINGS

Other objects, features and advantages of the present invention will become more apparent from the following detailed description when read in conjunction with the accompanying drawings, in which:

FIG. 1 is a schematic diagram of an exhaust gas treating apparatus in a disassembled state according to the present invention;

FIG. 2 is a schematic cross-sectional view of a vertical plane with respect to the longitudinal direction of the exhaust gas treating apparatus according to the present invention;

FIG. 3 is a schematic diagram of a mat member used in the exhaust gas treating apparatus according to the present invention;

FIG. 4 is a schematic cross-sectional view of an interface between a mat member and a casing after the heating element has emitted heat, in the exhaust gas treating apparatus according to the present invention;

FIG. 5 shows examples of exothermic chemical reactions using metal and inorganic compounds as starting materials;

FIG. 6 shows examples of exothermic chemical reactions using a first metal and a second metal as starting materials;

FIG. 7 shows examples of exothermic chemical reactions using three kinds of starting materials;

FIG. 8 is an example of a flowchart of a method of manufacturing the exhaust gas treating apparatus according to the present invention;

FIG. 9 illustrates an example of an application of the exhaust gas treating apparatus according to the present invention;

FIG. 10 is a schematic cross-sectional view of another interface between a mat member and a casing after the heating element has emitted heat, in the exhaust gas treating apparatus according to the present invention;

FIG. 11 is a schematic cross-sectional view of a test sample;

FIG. 12 is a schematic diagram of a testing apparatus for measuring bonding strength; and

FIG. 13 is a graph illustrating the relationship between heat generation densities of the powder mixture and bonding strengths.

## DETAILED DESCRIPTION OF THE PREFERRED EMBODIMENTS

A description is given, with reference to the accompanying drawings, of an embodiment of the present invention.

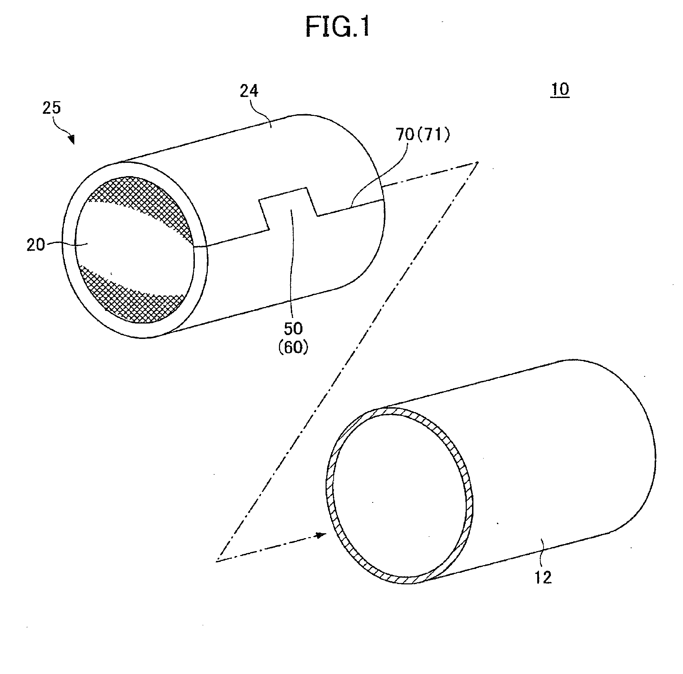

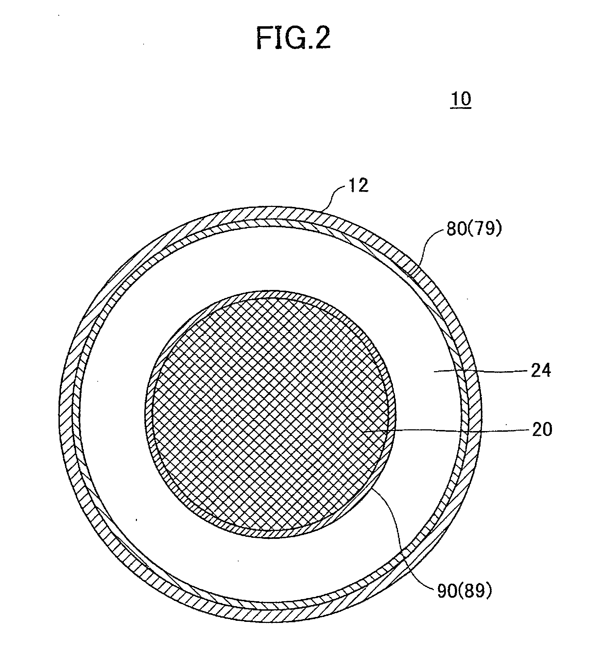

FIG. 1 is a schematic perspective view of an exhaust gas treating apparatus in a disassembled state according to the present invention. Furthermore, FIG. 2 is a schematic cross-sectional view of a vertical plane with respect to the axial (longitudinal) direction of the exhaust gas treating apparatus shown in FIG. 1. The example of the exhaust gas treating apparatus shown in FIG. 1 is manufactured by a press-fitting method. However, it is obvious to those skilled in the art that the exhaust gas treating apparatus may be manufactured by another method, such as a clamshell method, a winding-tightening method, a sizing method, or the like.

As shown in FIG. 1, an exhaust gas treating apparatus 10 according to the present invention includes an exhaust gas treating body 20, a mat member 24 wound around the peripheral surface of the exhaust gas treating body 20, and a casing 12 for accommodating the exhaust gas treating body 20 around which the mat member 24 is wound (hereinafter, "integrated exhaust gas treating body 25").

The exhaust gas treating body 20 is, for example, a catalyst carrier having plural through holes extending in a direction parallel to the longitudinal direction. In this catalyst carrier, a catalyst is supported by each of the cell walls made of ceramics forming a honeycomb structure, for example. Alternatively, the exhaust gas treating body 20 may be a DPF having plural through holes extending in a direction parallel to the longitudinal direction, in which the ends of the through holes are sealed in a checkered manner at both of the opening faces of the exhaust gas treating body 20.

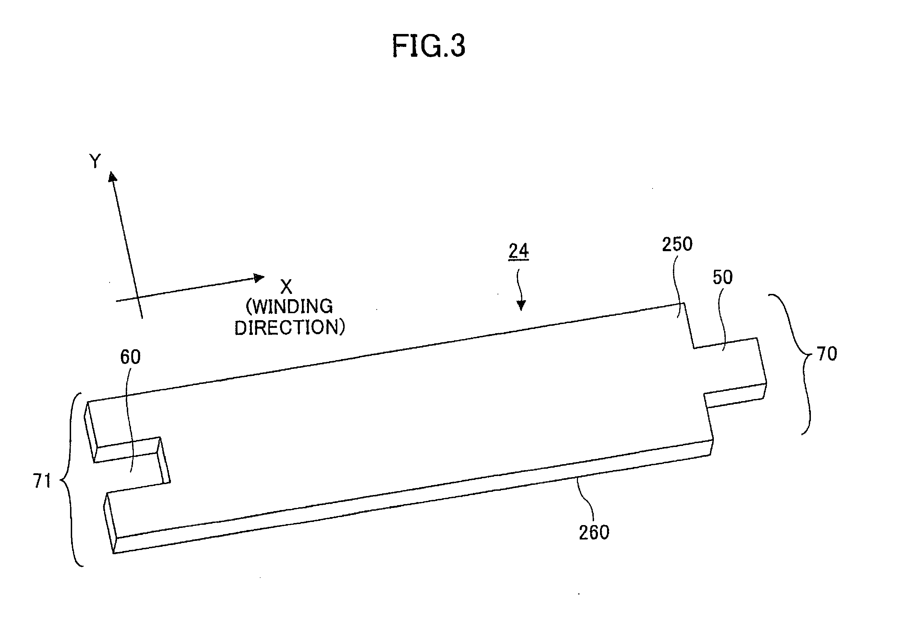

FIG. 3 illustrates an example of the mat member 24. The mat member 24 includes a first main surface 250 and a second main surface 260. Furthermore, the mat member 24 includes two edge faces 70 and 71 perpendicular to the direction in which the sheet member 24 is wound (X direction in FIG. 3). The edge faces 70 and 71 have a mating protruding part 50 and a mating receding part 60, respectively. Thus, when the mat member 24 is wound around the peripheral surface of the exhaust gas treating body 20 as shown in FIG. 1, the mating protruding part 50 is mated to the mating receding part 60, and the mat member 24 is fixed to the exhaust gas treating body 20. Moreover, the edge faces 70 and 71 of the mat member 24 are fixed with the use of adhesive tape or the like so that the mated part does not become detached while handling the "integrated exhaust gas treating body 25".

The mat member 24 constitutes a mat-like component including inorganic fiber. Any kind of inorganic fiber may be used; however, inorganic fiber including alumina and silica is typically used. If the mat member 24 were only made of inorganic fiber, the bulk of the mat member 24 would increase, and it would be difficult to handle the mat member 24. Therefore, the mat member 24 is usually impregnated with an organic binder.

The casing 12 constitutes metal such as stainless steel, nickel alloy, or the like.

As shown in FIG. 2, the exhaust gas treating apparatus 10 according to the present invention includes a first heating element 80 provided at an interface 79 of the mat member 24 and the case 12, and a second heating element 90 provided at an interface 89 of the exhaust gas treating body 20 and the mat member 24, although not shown in FIG. 1 nor described with reference to FIG. 1 as a matter of clarification. In this example, the first heating element 80 and the second heating element 90 are provided at both interfaces 79 and 89, respectively; however, either one may be omitted. Furthermore, the first heating element 80 may be provided across the entire interface 79 and the second heating element 90 may be provided across the entire interface 89, respectively, or the first heating element 80 may be provided at a part of the interface 79 and the second heating element 90 may be provided at a part of the interface 89, respectively. The first and second heating elements 80 and 90 have features of emitting heat when the temperature exceeds a predetermined value. For example, the first and second heating elements 80 and 90 constitute a substance that generates a significant exothermic reaction in a temperature region where the temperature exceeds a predetermined value.

Next, descriptions are given of effects of the exhaust gas treating apparatus 10 according to the present invention.

Generally, for example, when an exhaust gas treating apparatus is provided in the middle of an exhaust pipe of an engine, and the engine operates, exhaust gas of high temperature (typically 400 °C through 1000 °C) flows through the exhaust gas treating apparatus, and when the engine stops, exhaust gas stops flowing through the exhaust gas treating apparatus. Due to the change in temperature, the casing and the exhaust gas treating body of the exhaust gas treating apparatus expand/contract, and therefore the mat member repeatedly receives compression/decompression loads in the radial direction of the exhaust gas treating body from both main surfaces. Usually, the amount of damaged inorganic fiber included in the mat member increases due to repeatedly receiving such loads. Thus, the holding force of the mat member decreases with the passage of time. Subsequently, when the holding force of the mat member drops below the minimum value necessary for holding the exhaust gas treating body, the mat member can no longer hold the exhaust gas treating body. Thus, the exhaust gas treating body or the mat member becomes displaced from the predetermined position, and therefore the exhaust gas treating apparatus may not be able to effectively treat the exhaust gas.

However, as described above, the exhaust gas treating apparatus 10 according to the present invention includes the first heating element 80 and the second heating element 90 which are provided at the interface 79 and the interface 89, respectively.

The first heating element 80 and the second heating element 90 are heated by heat of the exhaust gas that enters the exhaust gas treating body 20 while the exhaust gas treating apparatus 10 is being used. When the temperature of the first heating element 80 and the second heating element 90 exceeds a predetermined value, heat is emitted from the first heating element 80 and the second heating element 90. Thus, the temperature of the positions where the first heating element 80 and the second heating element 90 are disposed and neighboring positions increases acutely due to the heat emitted from the heating elements. For example, when the first heating element 80 is provided at the interface 79 of the mat member 24 and the casing 12, the temperature rises locally and acutely at a position on the casing 12 in contact with or close to the first heating element 80 and neighboring positions (hereinafter, "high temperature contact position"). When the temperature of this "high temperature contact position" exceeds the melting point of the material of the inner surface of the casing 12, the inner surface of the casing 12 melts, and molten material is formed. The molten material generated from the casing 12 moves, in a molten state, toward the outer surface of the mat member 24 (e.g., the first main surface 250) facing the inner surface of the casing 12. Furthermore, the molten material enters inside the mat member 24 from the outer surface of the mat member 24. However, as the molten material moves, the distance between the molten material and the first heating element 80 increases, and as this distance increases, the temperature of the molten material decreases. Accordingly, when the molten material has moved a certain distance, e.g., the molten material reaches a certain position on the first main surface 250 of the mat member 24 and/or a certain depth inside the mat member 24, the temperature of the molten material falls below its melting point. Accordingly, the molten material starts solidifying. For example, when the first heating element 80 stops generating heat as the substance contributing to heat generation disappears, the local increase in temperature of the casing 12 stops, and the formation of molten material will stop.

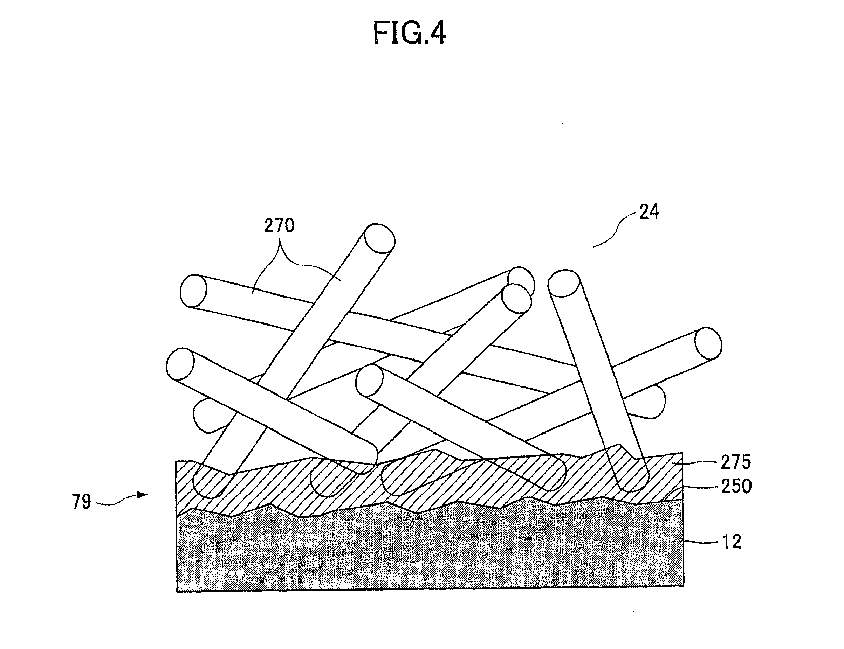

Due to the sequential process of melting the inner surface of the casing 12, moving the molten material, and solidifying molten material, the interface 79 of the mat member 24 and the casing 12 will finally have the form as illustrated in FIG. 4. That is, a molten-solidified layer 275 will be formed at the interface 79, extending from the first main surface 250 of the mat member in the depth direction of the mat member.

The molten-solidified layer 275 contributes to enhancing the bonding strength of the casing 12 and the mat member 24. The molten-solidified layer 275 is solidified with many inorganic fibers 270 of the mat member 24 captured in the molten-solidified layer 275, so that the molten-solidified layer 275 firmly bonds together the mat member 24 and the casing 12. The molten-solidified layer 275 extends inside the mat member 24, and therefore the mat member 24 has favorable resistance with respect to a force in the lateral direction (longitudinal direction) of the exhaust gas treating apparatus. Accordingly, once the molten-solidified layer 275 is formed, the positional displacement of the mat member 24 with respect to the casing 12 hardly occurs. It is particularly noted that this effect is maintained even as features of a typical mat member changes with the passage of time, i.e., even as the amount of damaged inorganic materials included in the mat member increases with the passage of time.

Accordingly, in the exhaust gas treating apparatus according to the present invention, the positional displacement of components hardly occurs for a longer period of time compared to conventional exhaust gas treating apparatuses.

Furthermore, as the casing 12 locally melts as described above, the surface roughness of the inner surface of the casing 12 will be relatively high. The increase in surface roughness contributes to the increase in the friction coefficient with respect to the movement of the mat member 24 along the longitudinal direction of the exhaust gas treating apparatus. Accordingly, assuming that the mat member 24 receives large stress in this direction from outside and part of the molten-solidified layer 275 breaks, the rough surface of the casing 12 will continue to mitigate the positional displacement of the mat member, thereby attaining a significant effect.

It is obvious that the same effect can be attained by the second heating element 90 at the interface 89 between the mat member 24 and the exhaust gas treating body 20. However, the inner surface of the casing 12 usually constitutes metal, whereas the peripheral surface of the exhaust gas treating body 20 constitutes ceramics such as cordierite or the like, which has a higher melting point than that of metal. Thus, in order to form the molten-solidified layer 275 as described above at the interface 89, the heat value of the second heating element 90 is preferably higher than that of the first heating element 80.

Such a heating element may emit heat according to an exothermic chemical reaction.

A preferable chemical reaction to be selected for this configuration is a chemical reaction that occurs at a temperature range of the exhaust gas (e.g., 450 °C through 1000 °C). Accordingly, when the exhaust gas flows through, the exothermic reaction starts immediately, thus attaining the above-described effect.

The starting material used for the chemical reaction is preferably configured to form a liquid at the above-described temperature range of exhaust gas, i.e., the starting material preferably has a melting point within this range. By using such a starting material, the chemical reaction can be quickly generated. In a typical chemical reaction, the reaction of liquid/solid or liquid/liquid is faster than that of solid/solid.

The melting point of the product generated as a result of the chemical reaction is preferably higher than the above-described temperature range of exhaust gas. If the product is in a liquid-phase state, the molten material of the casing or the exhaust gas treating body is mixed with this product, which may hamper the movement of the molten material toward the mat member. However, the product generated as a result of the chemical reaction may be a product that sublimates or volatilizes in the above-described temperature range of exhaust gas. In this case, it is possible to mitigate the reaction product from hampering the movement of the molten material toward the mat member.

The heat generation density of the heating element (heat value per unit area at the interface 79 or the interface 89) may be in a range of 0.1 kJ/cm$^2$ through 0.4 kJ/cm$^2$, although this depends on the melting target. These values depend on the melting point, the melting amount, the melting area and the like of the melting target.

In the case of a heating element using a chemical reaction, the starting material necessary for the reaction may be any of the various material systems described below.

(A) Combination of metal (or alloy) and inorganic compound

Combinations of metal and an inorganic compound include, for example, a combination of aluminum and oxide, nitride, carbide, or the like. The oxide may be, for example, iron oxide, titanium oxide, or the like. The nitride may be titanium oxide, silicon nitride, titanium nitride, zirconium nitride, hafnium nitride, vanadium nitride, niobium nitride, tantalum nitride, or the like. The carbide may be boron carbide, aluminum carbide, or the like.

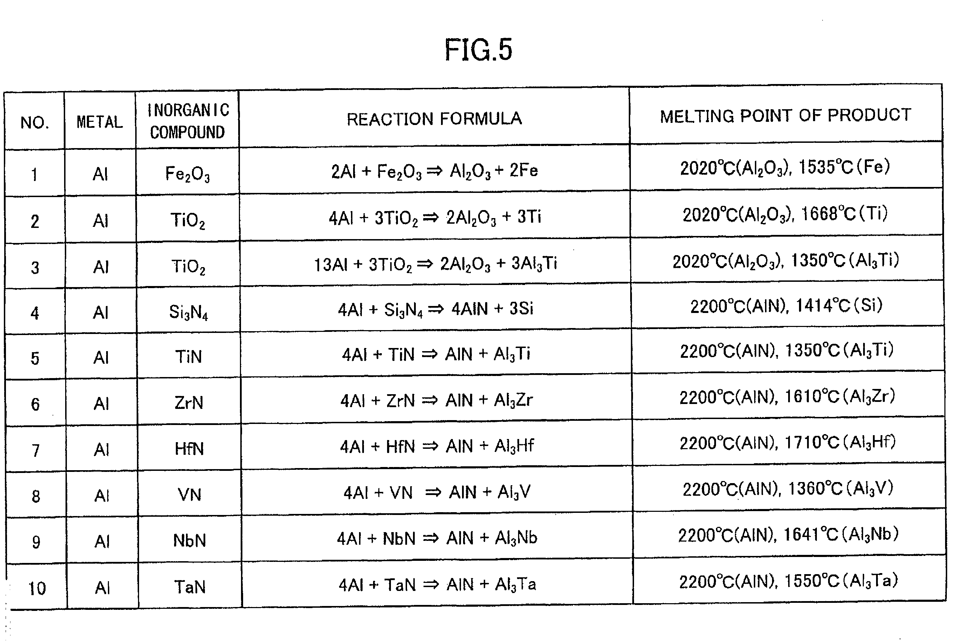

FIG. 5 shows examples of combinations of metals and inorganic compounds, together with melting points of the products. In each reaction formula, the reaction heat is a negative value (e.g., the reaction heat $\Delta H$ of the reaction of No. 1 is -851.5 kJ/mol), which means that these reactions are exothermic reactions. Accordingly, each combination may be used as the starting material of the above-described heating element. In FIG. 5, the melting point of aluminum used as one of the starting materials for each reaction is approximately 660 °C, which is equal to or lower than the temperature of exhaust gas described above. Furthermore, the melting point of the product of each reaction is at least 1350 °C (e.g., the cases of Nos. 3 and 5), which is higher than the temperature of exhaust gas.

(B) Combination of metal (or alloy) and metal (or alloy)

A mixture of a first metal (or alloy) and a second metal (or alloy) may be used as the starting material necessary for a chemical reaction. As the first metal, aluminum may be used. The second metal may include steel, titanium, zirconium, hafnium, vanadium, niobium, tantalum, nickel, and the like.

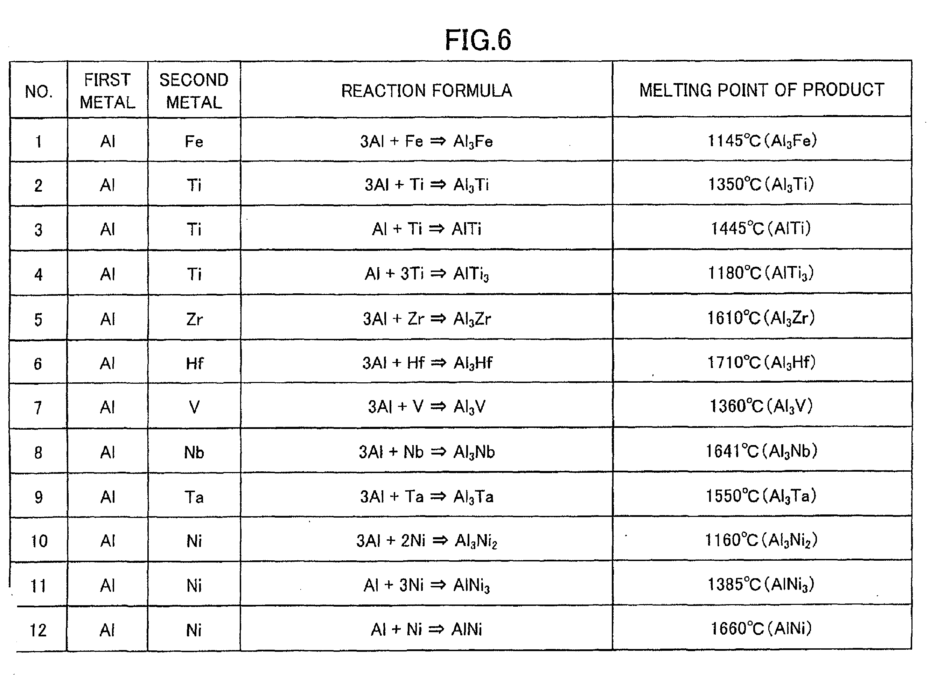

FIG. 6 shows examples of combinations of a first metal (or alloy) and a second metal (or alloy), together with melting points of the products. In each reaction formula, the reaction heat is a negative value, which means that these reactions are exothermic reactions. Accordingly, each combination may be used as the starting material of the above-described heating element. In FIG. 6, the melting point of aluminum used as one of the starting materials for each reaction is approximately 660 °C, which is equal to or lower than the temperature of exhaust gas described above. Furthermore, the melting point of the product of each reaction is at least 1145 °C (e.g., the cases of No. 1), which is higher than the temperature of exhaust gas.

(C) Combination of three kinds of materials

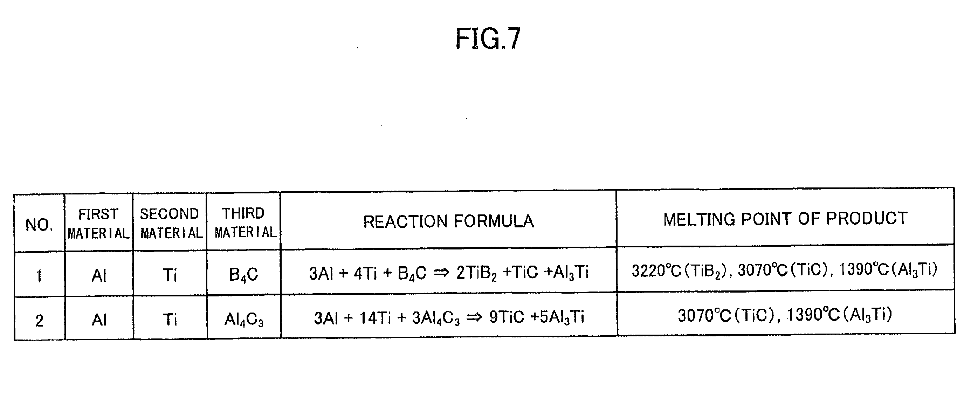

In each of the above combination examples, two kinds of materials are used as the starting materials; however, the combinations of the heating element according to the present invention are not limited thereto. For example, three kinds of materials may be used as the starting materials. FIG. 7 shows examples of such combinations, together with melting points of the products. In each reaction formula, the reaction heat is a negative value, which means that these reactions are exothermic reactions. Accordingly, each combination may be used as the starting material of the above-described heating element. In FIG. 7, the melting point of aluminum used as one of the starting materials for each reaction is approximately 660 °C, which is equal to or lower than the temperature of exhaust gas described above. Furthermore, the melting point of the product of each reaction is at least 1390 °C ($Al_3Ti$), which is higher than the temperature of exhaust gas.

When aluminum (or aluminum alloy) is used, it is preferable to add a substance having a function of mitigating oxidation of aluminum and/or a function deoxidizing an oxide film on the surface of aluminum. Accordingly, the exothermic reaction can be attained more quickly (or at a lower temperature). Examples of a substance having such functions are Mg, Ca, Li, and the like.

In the above description, metallic elements are taken as examples of metals used as the starting material; however, the metal used as the starting material may be an alloy. For example, Al-Cu alloy, Al-Mn alloy, Al-Si alloy, and Al-Mg alloy have melting points of approximately 550 °C, 660 °C, 580 °C, and 450 °C, respectively. Thus, by using these alloys, it is possible to decrease the temperature at which liquid phases generate.

The above combinations are merely examples, and it is obvious that the scope of the present invention is not limited by these examples.

The first heating element 80 and the second heating element 90 may be provided at the interfaces 79 and 89, respectively, by any method such as brush painting, spray painting, or the like. Furthermore, the heating element may be provided at the interfaces 79 and 89 in any form, such as powder, a sheet, a layer, or the like. Particularly, when a heating element that uses exothermic heat generated by a chemical reaction is to be provided, starting materials necessary for a chemical reaction are turned into powder, and the powder may be provided across the entire interface or at a part of the interface. Alternatively, the powder may be mixed with an organic solvent to prepare a liquid or a paste, and this mixture may be applied to the interfaces 79 and 89.

The first heating element 80 and the second heating element 90 may be provided on any surface that forms an interface when the exhaust gas treating apparatus is completed, such as the inner surface of the casing 12, the first main surface 250 and/or the second main surface 260 of the mat member 24, the peripheral surface of the exhaust gas treating body 20, or the like.

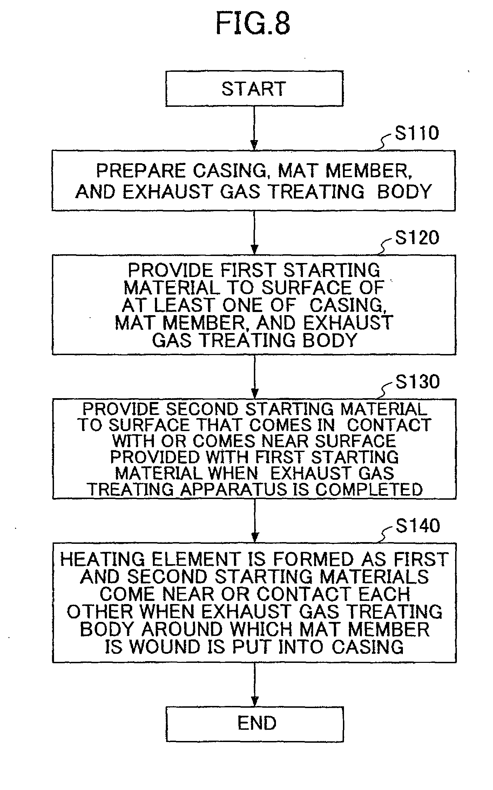

For example, a first starting material necessary for a chemical reaction is provided on the inner surface of the casing 12, and a second starting material is provided on one of the main surfaces of the mat member 24, or the other way around. Accordingly, at the stage of manufacturing the exhaust gas treating apparatus, when the first starting material and the second starting material contact each other or come close to each other, the first heating element 80 is formed at the interface 79. The same applies to the peripheral surface of the exhaust gas treating body 20 and the other main surface of the mat member 24. FIG. 8 is an example of a flowchart of a method of manufacturing the exhaust gas treating apparatus in which a heating element is provided on the interface 79 and/or the interface 89 by the above method. It is to be noted that in FIG. 8, the "first (second) starting material" may be a single material or may include plural materials.

The features of the present invention are described above, taking as an example the configuration in which the exhaust gas treating apparatus is actually connected to an exhaust pipe of a vehicle or the like, the heating elements are activated by the heat of exhaust gas that flows through this exhaust pipe, and the heating elements emit heat at the interfaces 79 and 89 (so called "in-situ heat treating method"). However, the present invention is not limited to such an embodiment. For example, the above-described molten-solidified layer 275 may be formed at the interface 79 and/or the interface 89 by placing the exhaust gas treating apparatus having the above-described configuration in an electric furnace or the like before actually using the exhaust gas treating apparatus, and keeping the exhaust gas treating apparatus in a high temperature to activate the heating element (so called "thermal pretreatment method").

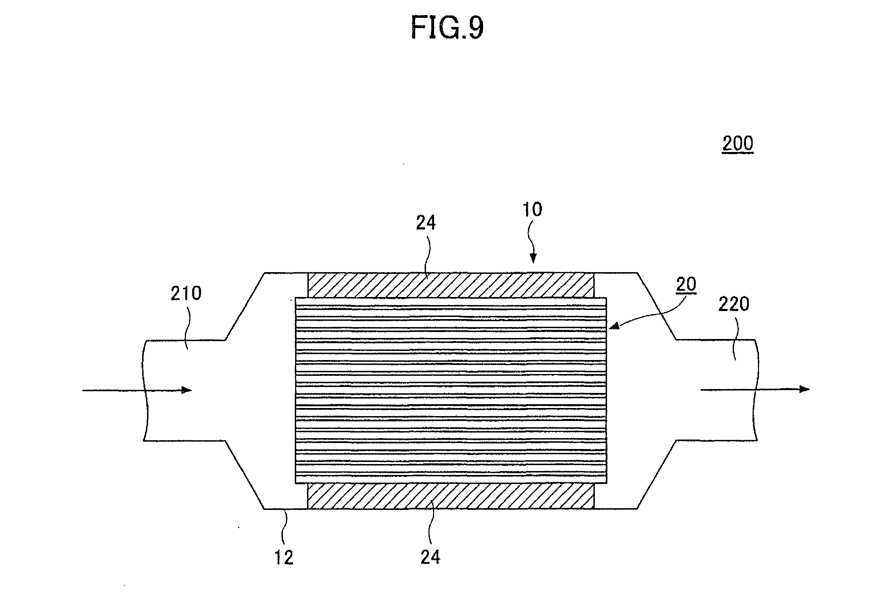

FIG. 9 illustrates an example of an application of the exhaust gas treating apparatus according to the present invention. In the example illustrated in FIG. 9, the exhaust gas treating apparatus 10 is provided in the middle of an exhaust pipe 200 for discharging exhaust gas generated by an engine of a vehicle or the like outside the system.

The exhaust pipe 200 includes an inlet pipe 210 and an outlet pipe 220 for the exhaust gas. The exhaust gas treating apparatus 10 according to the present invention is provided between the inlet pipe 210 and the outlet pipe 220. In the example illustrated in FIG. 9, the inlet pipe 210 and the outlet pipe 220 are taper-shaped in such a manner that their diameters are increased at positions at which they are connected to the casing 12 of the exhaust gas treating apparatus 10. However, they do not necessarily need to be taper-shaped.

As described above, the exhaust gas treating apparatus according to the present invention has a configuration in which positional displacement hardly occurs among the components of the exhaust gas treating body, the mat member, and the casing. Therefore, exhaust gas treatment properties can be stably attained for a long period of time.

The effects of the present invention are described as follows. Specifically, in the above-described example, heat is generated from the first heating element 80 and/or the second heating element 90 provided at the interface 79 of the casing 12/mat member 24 and/or the interface 89 of the mat member 24/exhaust gas treating body 20, respectively. Part of the components (the casing or the exhaust gas treating body) melts due to this heat, thereby forming a molten-solidified layer. However, this phenomenon is described only as one example so that the present invention is easily understood. That is, the first heating element 80 and the second heating element 90 provided at the interfaces 79 and 89, respectively, may exhibit behaviors different from the above phenomenon.

For example, it is assumed that the heating element of No. 1 shown in FIG. 5, which uses aluminum and iron oxide as starting materials, is provided at the interface 79 of the casing 12/mat member 24. For example, when exhaust gas flows through the exhaust gas treating apparatus and the temperature of the interface 79 reaches the melting point of aluminum, the aluminum included in the heating element starts to melt. The molten aluminum may move from the surface of the mat member 24 toward the inside of the mat member 24. Accordingly, part of the molten aluminum may cover part of the inorganic fiber included in the mat member 24. The alumina, which is a reaction product of the heating element, is generated as a result of the reaction of the aluminum in a molten state. That is, alumina is generated wherever the aluminum is present, also inside the mat member 24. Therefore, when the molten aluminum, which is covering a part of the inorganic fiber included in the mat member, changes to a layer of a reaction product (i.e., an alumina layer) as a result of this reaction, the inorganic fiber is captured in the alumina layer.

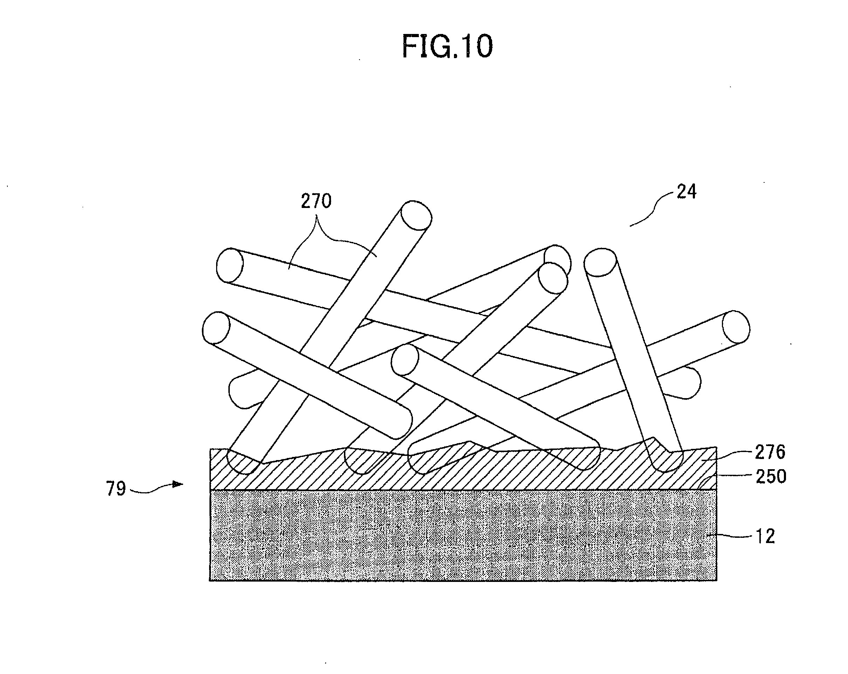

FIG. 10 illustrates the final interface 79 attained as a result of such a phenomenon. At the interface 79, part of the inorganic fibers 270 is captured by a reaction product layer 276. The mat member 24 and the casing are firmly bonded to each other by the reaction product layer 276 which is the final product, and therefore the same effects as above can be achieved. It is to be noted that in this example, unlike the example illustrated in FIG. 4, the casing 12 has not undergone the melting process.

As described above, at the interfaces 79, 89 provided with the first heating element 80 and the second heating element 90, respectively, several phenomena may occur. Particularly, in the actual exhaust gas treating apparatus, it is typical that both of the above phenomena, or even another phenomenon occur at the same time. Thus, it is to be noted that the present invention may be any kind of exhaust gas treating apparatus in which the first heating element 80 and the second heating element 90 are provided at the interfaces 79 and 89, respectively, regardless of the kind of phenomenon that may occur at the interfaces 79 and 89.

Effects of the present invention are described below with examples.

<Example 1>

(Manufacturing powder mixture for heating element)

Aluminum powder (manufactured by Kishida Chemical Co., Ltd., purity 90%) having particle sizes of less than or equal to 45 μm and iron oxide ($Fe_2O_3$) powder (manufactured by Kishida Chemical Co., Ltd., purity 98%) were weighed and mixed together so that the molar ratio was $Al:Fe_2O_3=2:1$. The powders were put in a mortar, acetone was added to the powders, and this was mixed together for 60 minutes. Subsequently, this mixture was put in a drying machine and was dried for one hour in 110 °C, thereby attaining a powder mixture for the heating element.

(Manufacturing inorganic fiber mat member)

Silica sol was added to a basic aluminum chloride aqueous solution in which the aluminum content was 70 g/l and the atom ratio was Al/Cl=1.8, so that the composition ratio of the alumina fiber was $Al_2O_3:SiO_2=72 : 28$, thereby preparing the precursor of alumina fiber. Next, polyvinyl alcohol was added to this precursor of alumina fiber. Subsequently, this liquid was concentrated to prepare a spinning solution. This spinning solution was used in a spinning operation performed by a blowing process. The flow rate of the conveying carrier gas (air) was 52 m/s and the supplying speed of the spinning solution was 5.3 ml/h.

Subsequently, the precursors of alumina fiber were folded and laminated to each other so that a raw material sheet of alumina fiber was manufactured.

Next, needling processing was performed on this raw material sheet. The needling processing was performed from one side of the raw material sheet by disposing a needle board, on which needles are arranged at a density of 80 needles/100 $cm^2$, only on the side of one of the main surfaces of the raw material sheet.

Subsequently, the resultant raw material sheet was continuously fired at a temperature ranging from a normal temperature to a maximum temperature of 1,250 °C for an hour, thereby forming the mat member.

The mat member formed in the above manner, having a thickness of 7.4 mm and a basis weight of 1240 g/$m^2$, was cut to a size of length 50 mm × width 40 mm, thereby manufacturing a test mat member. This mat member does not include an organic binder.

(Manufacturing test sample)

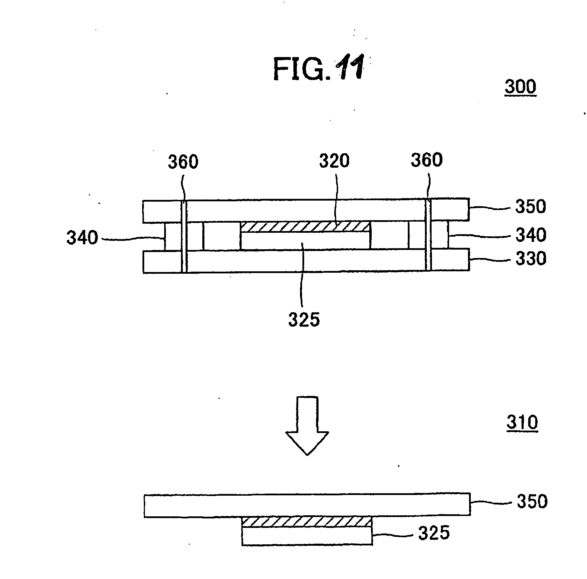

The mat member manufactured by the above method was used to manufacture an evaluation test sample 310 shown in FIG. 11 by the following method.

The above-described powder mixture was applied entirely on one of the main surfaces (area of 50 mm × 40 mm) of the mat member manufactured by the above-described method, so that the application amount was 75 mg/$cm^2$. This application amount corresponds to 0.3 kJ/$cm^2$ when converted to heat generation density.

Next, as shown in FIG. 11, a mat member 325 covered by a powder mixture 320 was placed in the center of a stainless steel plate (SUS 304) 330 having a size of length 150 mm × width 40 mm × thickness 1 mm, in such a manner that the surface covered by the powder mixture 320 is facing upward. Then, metal spacers 340, each having the same thickness as that of the mat member 325, were provided on both edges of the mat member 325. Subsequently, another stainless steel plate (SUS 304) 350 having a size of length 150 mm × width 40 mm × thickness 1 mm was arranged on top of these components, in such a manner as to overlap the position of the stainless steel plate 330 in the direction of laminated layers. Finally, a metal wire 360 was wound around each of the edges of the stainless steel plates 330 and 350 to fix the components together, thereby forming an assembly 300.

This assembly 300 was put in an atmosphere electric furnace, and was kept in there for 10 minutes at a temperature of 1000 °C. Subsequently, the assembly 300 was removed from the electrical furnace and was naturally cooled. The metal wires 360 used for fixing the components were removed from the resultant assembly 300, so that the components were separated from one another. Finally a test sample 310 was formed, in which the stainless steel plate 350 and the mat member 325 were joined together.

As a result of visual observation, the two components were well bonded together. Furthermore, no abnormalities were found in the stainless steel plate 350.

<Example 2>

By the same method as example 1, a test sample was manufactured. However, in example 2, the application amount of the powder mixture on the surface of the mat member was 25 mg/cm$^2$. This application amount corresponds to 0.1 kJ/cm$^2$ when converted to heat generation density. The other conditions were the same as those of example 1.
As a result of visual observation, the two components were well bonded together. Furthermore, no abnormalities were found in the stainless steel plate 350.

<Example 3>

By the same method as example 1, a test sample was manufactured. However, in example 3, the application amount of the powder mixture on the surface of the mat member was 50 mg/cm$^2$. This application amount corresponds to 0.2 kJ/cm$^2$ when converted to heat generation density. The other conditions were the same as those of example 1.
As a result of visual observation, the two components were well bonded together. Furthermore, no abnormalities were found in the stainless steel plate 350.

<Example 4>

By the same method as example 1, a test sample was manufactured. However, in example 4, the application amount of the powder mixture on the surface of the mat member was 100 mg/cm$^2$. This application amount corresponds to 0.4 kJ/cm$^2$ when converted to heat generation density. The other conditions were the same as those of example 1.
As a result of visual observation, the two components were well bonded together. Furthermore, no abnormalities were found in the stainless steel plate 350.

<Example 5>

By the same method as example 1, a test sample was manufactured. However, in example 5, the application amount of the powder mixture on the surface of the mat member was 150 mg/cm$^2$. This application amount corresponds to 0.6 kJ/cm$^2$ when converted to heat generation density. The other conditions were the same as those of example 1.
As a result of visual observation, the two components were well bonded together. Furthermore, no abnormalities were found in the stainless steel plate 350.

<Comparative example 1>

By the same method as example 1, a test sample was manufactured. However, in comparative example 1, the powder mixture is not applied on the surface of the mat member. The other conditions were the same as those of example 1.
After being kept in an atmosphere electric furnace for 10 minutes at a temperature of 1000 °C, the metal wires used for fixing the components were removed from the resultant assembly. The stainless steel plate 350 and the mat member 325 were not joined together at all.

<Comparative example 2>

By the same method as example 1, an inorganic fiber mat member (length 50 mm × width 40 mm × thickness 7.4 mm) was manufactured. On one of the main surfaces of this mat member (area of 50 mm × 40 mm), a high polymer material was provided. The application amount was 0.8 mg/cm$^2$. A styrenebutadiene adhesive (spray type adhesive Z-2 manufactured by Konishi Co., Ltd.) was used as the high polymer material.
Subsequently, a test sample was manufactured by the same method as example 1. However, after being kept in an atmosphere electric furnace for 10 minutes at a temperature of 1000 °C, the stainless steel plate 350 and the mat member 325 were not joined together at all.
Table 1 indicates the manufacturing conditions and the state after heat treatment for all of the test samples of the examples and comparative examples.

(Table 1)

| | POWDER MIXTURE FOR GENERATING HEAT | | | APPLICATION AMOUNT [mg/cm$^2$] | HEAT GENERATION DENSITY [kJ/cm$^2$] | STATE OF DEPOSITION | STATE OF STAINLESS STEAL PLATE | BONDING STRENGTH [N/cm$^2$] |
|---|---|---|---|---|---|---|---|---|
| | METAL | INORGANIC COMPOUND | MOLAR RATIO | | | | | |
| EXAMPLE 1 | Al | Fe$_2$O$_3$ | 2:1 | 75 | 0.3 | GOOD | GOOD | 2.38 |
| EXAMPLE 2 | Al | Fe$_2$O$_3$ | 2:1 | 25 | 0.1 | GOOD | GOOD | 1.84 |
| EXAMPLE 3 | Al | Fe$_2$O$_3$ | 2:1 | 50 | 0.2 | GOOD | GOOD | 2.14 |
| EXAMPLE 4 | Al | Fe$_2$O$_3$ | 2:1 | 100 | 0.4 | GOOD | GOOD | 2.95 |
| EXAMPLE 5 | Al | Fe$_2$O$_3$ | 2:1 | 150 | 0.6 | GOOD | DEFORMED | 3.77 |
| COMPARATIVE EXAMPLE 1 | - | - | - | - | - | - | GOOD | 0.96 |
| COMPARATIVE EXAMPLE 2 | APPLY HIGH POLYMER MATERIAL | | | 0.8 | UNKNOWN | BAD | GOOD | 0.98 |

(Evaluation of bonding strength)

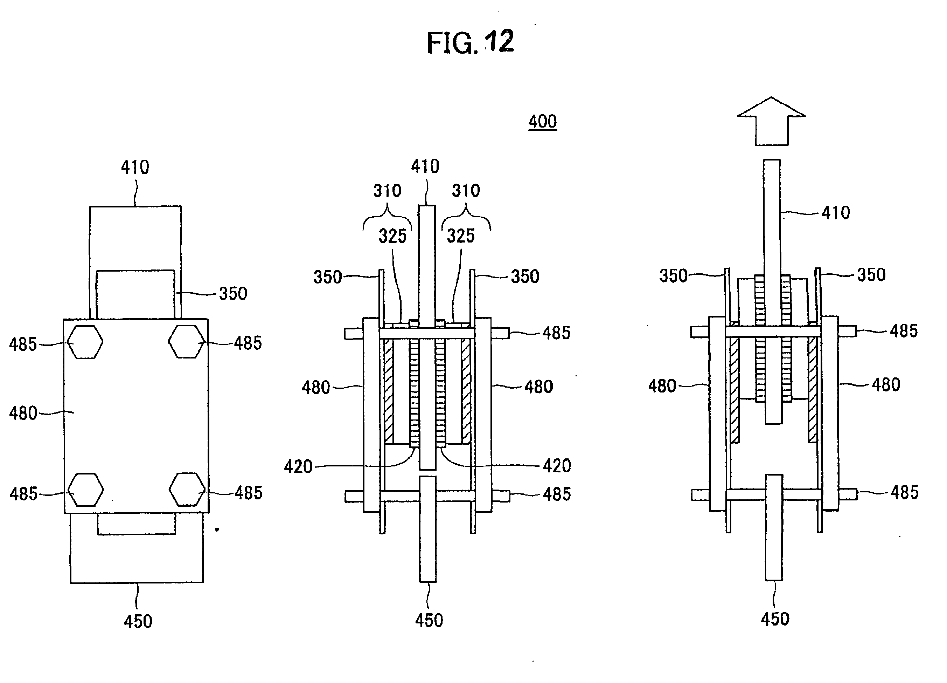

The bonding strength between the mat member and the stainless steel plate was evaluated for each of the test samples (examples 1 through 5 and comparative examples 1 and 2) manufactured by the above method. The evaluation of the bonding strength was performed with a testing apparatus 400 shown in FIG. 12.

The testing apparatus 400 includes a center plate 410 that can move up and down, a fixed plate 450 provided on the same axis as the center plate 410 and fixed at this position, and two pressing tools 480. The center plate 410, the fixed plate 450, and the pressing tools 480 are made of stainless steel.

Attachment members 420 are respectively provided on the front side and back side of the center plate 410 at positions corresponding to each other. On each attachment member 420, on the surface opposite to that in contact with the center plate 410, multiple needle-like protruding parts are provided, extending in a substantially perpendicular direction with respect to each surface of the center plate 410. The full length of each needle-like protruding part is approximately 2 mm. The length and width of each of the attachment members 420 are substantially the same as those of the above-described mat member 325 (to be more precise, the attachment member 420 has a size of length 50 mm × width 40 mm, but is somewhat larger than the mat member 325).

The pressing tools 480 are made of rectangular planks, and each of the pressing tools 480 has openings corresponding to bolt holes at four corners. Furthermore, the fixed plate 450 also has openings corresponding to bolt holes at two predetermined positions.

To evaluate the bonding strength, two of each of the above-described evaluation test samples 310 were used. When setting the evaluation test samples 310 in the testing apparatus 400, each evaluation test sample 310 was fixed to the surface of one of the pressing tools 480. Each evaluation test sample 310 was fixed, with the use of double-faced adhesive tape or the like, in such a manner that the side of the stainless steel plate 350 of the evaluation test sample 310 was in contact with the pressing tool 480.

Next, the pressing tools 480 were disposed on both sides of the center plate 410, in such a manner that the evaluation test samples 310 were located inside the center plate 410 and the pressing tools 480. More specifically, the pressing tools 480 were disposed in such a manner that the surfaces of the mat members 325 of the evaluation test samples 310 were in contact with the surfaces of the attachment members 420. As described above, needle-like protruding parts are provided on the surfaces of the attachment members 420. With the use of these protruding parts, each evaluation test sample 310 was fixed to the center plate 410. Next, tightening bolts 485 were put through the four holes of one of the pressing tools 480 and the other one of the pressing tools 480, thereby tightening together both of the pressing tools 480 and fixing the evaluation test samples 310 provided between the pressing tools 480 (see left diagram of FIG. 12). In the actual test, the tightening force was adjusted so that the thickness of each mat member 325 after being set was 5.5 mm. As shown in the center of FIG. 12, the bottom two tightening bolts 485 of the four tightening bolts 485 go through not only the pressing tools 480 but also the fixed plate 450. Accordingly, the positions of these two pressing tools 480 were fixed.

To perform the test, as shown in the right drawing in FIG. 12, the center plate 410 is pulled upwards. In this state, the positions of the fixed plate 450 and the pressing tools 480 fixed to the fixed plate 450 do not change. Accordingly, by moving the center plate 410, the interface of the mat member 325 and the stainless steel plate 350 receives a shearing force, and therefore it is possible to evaluate the bonding strength at the interface of the mat member 325 and the stainless steel plate 350 by performing this test.

The speed of pulling up the center plate 410 was 10 mm/minute, and based on the obtained maximum load, the bonding strength was calculated by the following formula.

$$\texttt{bonding strength (N/cm}^2\texttt{)=maximum load (N)/(area of mat}$$
$$\texttt{member (cm}^2\texttt{)×2)}$$

The values of the bonding strength obtained for the test samples are shown in the above Table 1 (as described above, with regard to the test samples of comparative examples 1 and 2, the stainless steel plate 350 and the mat member 325 were not joined together at all. Therefore, in Table 1, the values of the bonding strength for comparative examples 1 and 2 are background values (zero) of the testing apparatus). These results say that the bonding strengths of the test samples of examples 1 through 5 are significantly higher than those of the conventional samplers of comparative examples 1 and 2.

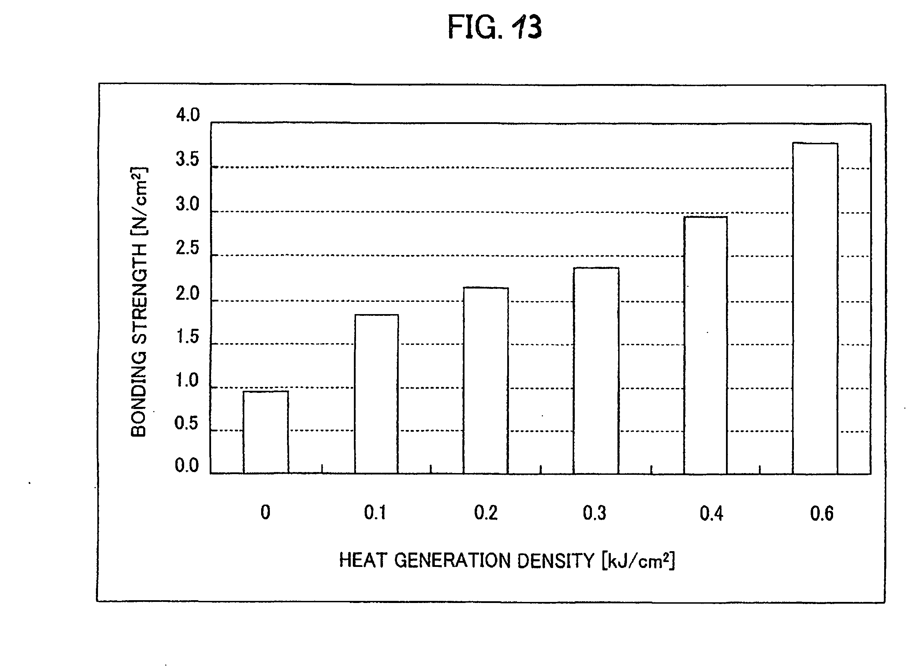

FIG. 13 illustrates the relationship between heat generation densities of the powder mixture and bonding strengths. This diagram shows that as the heat generation density of the powder mixture increases, the bonding strength increases. However, as indicated by example 5 in Table 1, if the heat generation density was too high, the bonding target that is to be bonded with the mat member would deteriorate or deform due to the heat. Accordingly, the heat generation density is preferably less than 0.6 kJ/cm.

The exhaust gas treating apparatus according to the present invention is applicable to a vehicle or the like.

According to one embodiment of the present invention, an exhaust gas treating apparatus includes an exhaust gas treating body; a mat member including inorganic fiber, the mat member being wound around at least a part of a peripheral surface of the exhaust gas treating body; a casing configured to accommodate the exhaust gas treating body around which the mat member is wound; and a heating element configured to emit heat, the heating element being provided at least one of between the exhaust gas treating body and the mat member and between the mat member and the casing.

In the exhaust gas treating apparatus, the heating element can emit heat in such a manner that at least one of the exhaust gas treating body and the casing melts near the heating element.

The heating element can be provided as a powder or as a layer, on at least a part of at least one of the exhaust gas treating body, the mat member, and the casing.

The heating element can be provided in a state bound by an organic binder.

The heating element can emit the heat in response to an exothermic chemical reaction.

A metal or an alloy, and an inorganic compound can be used as starting materials for the chemical reaction.

The inorganic compound can include iron oxide.

A first metal or a first alloy and a second metal or a second alloy can be used as the starting materials for the chemical reaction.

At least one material included in the starting materials can have a melting point falling in a range of 450 °C through 1000 °C.

The starting materials can include aluminum or an aluminum alloy.

A product of the chemical reaction can have a melting point that exceeds 1000 °C.

The exhaust gas treating body can include a catalyst carrier or an exhaust gas filter.

According to one embodiment of the present invention, a method of manufacturing an exhaust gas treating apparatus including an exhaust gas treating body, a mat member including inorganic fiber, the mat member being wound around at least a part of a peripheral surface of the exhaust gas treating body, and a casing configured to accommodate the exhaust gas treating body around which the mat member is wound, includes a heating element providing step of providing a heating element configured to emit heat, at least one of between the exhaust gas treating body and the mat member and between the mat member and the casing.

The heating element providing step can further include a step of providing the heating element as a powder or as a layer, on at least a part of at least one of the exhaust gas treating body, the mat member, and the casing.

The heating element can be provided in a state bound by an organic binder.

The heating element can emit the heat in response to an exothermic chemical reaction.

In the method, the heating element providing step can further include a step of providing a first starting material on a first surface of at least one of the exhaust gas treating body, the mat member, and the casing; a step of providing a second starting material on a second surface that comes in contact with or comes close to the first surface onto which the first starting material is provided when the exhaust gas treating apparatus is completed; and a step of bringing the fist starting material and the second starting material in contact with each other.

The method can further include a step of increasing the temperature of the exhaust gas treating apparatus so that the temperature of the exhaust gas treating apparatus falls in a range of 450 °C through 1000 °C.

The step of increasing the temperature of the exhaust gas treating apparatus so that the temperature of the exhaust gas treating apparatus falls in a range of 450 °C through 1000 °C can further include a step of causing exhaust gas to flow through the exhaust gas treating apparatus.

The exhaust gas treating body can include a catalyst carrier or an exhaust gas filter.

**Claims**

1.  An exhaust gas treating apparatus (10) comprising:

    an exhaust gas treating body (20);
    a mat member (24) including inorganic fiber, the mat member (24) being wound around at least a part of a peripheral surface of the exhaust gas treating body (20);
    a casing (12) configured to accommodate the exhaust gas treating body (20) around which the mat member (24) is wound; and
    a heating element (80, 90) configured to emit heat, the heating element (80, 90) being provided at a position between the exhaust gas treating body (20) and the mat member (24), and/or at a position between the mat member (24) and the casing (12); wherein

the heating element (80, 90) emits the heat in response to an exothermic chemical reaction; and **characterized in that**

the heating element (80, 90) is provided in such a manner that the product of the chemical reaction bonds said exhaust gas treating body (20) and the mat member (24), and/or the mat member (24) and the casing (12).

2. The exhaust gas treating apparatus according to claim 1, wherein
at least one of the exhaust gas treating body and the casing melts near the heating element due to the heat emitted by the heating element.

3. The exhaust gas treating apparatus according to claim 1 or 2, wherein
the heating element is provided as a powder or as a layer, on at least a part of at least one of the exhaust gas treating body, the mat member, and the casing.

4. The exhaust gas treating apparatus according to claim 3, wherein
the heating element is provided in a state bound by an organic binder.

5. The exhaust gas treating apparatus according to any one of claims 1 through 4, wherein
a metal or an alloy, and an inorganic compound are used as starting materials for the chemical reaction.

6. The exhaust gas treating apparatus according to claim 5, wherein
the inorganic compound includes iron oxide.

7. The exhaust gas treating apparatus according to any one of claims 1 through 4, wherein
a first metal or a first alloy and a second metal or a second alloy are used as the starting materials for the chemical reaction.

8. The exhaust gas treating apparatus according to any one of claims 5 through 7, wherein
at least one material included in the starting materials has a melting point falling in a range of 450°C through 1000°C.

9. The exhaust gas treating apparatus according to any one of claims 5 through 8, wherein
the starting materials include aluminum or an aluminum alloy.

10. The exhaust gas treating apparatus according to any one of claims 1 through 9, wherein
a product of the chemical reaction has a melting point that exceeds 1000°C.

11. The exhaust gas treating apparatus according to any one of claims 1 through 10, wherein
the exhaust gas treating body includes a catalyst carrier or an exhaust gas filter.

12. A method of manufacturing an exhaust gas treating apparatus (10) comprising an exhaust gas treating body (20), a mat member (24) including inorganic fiber, the mat member (24) being wound around at least a part of a peripheral surface of the exhaust gas treating body (20), and a casing configured to accommodate the exhaust gas treating body (20) around which the mat member (24) is wound, the method comprising:

a heating element (80, 90) providing step of providing a heating element (80, 90) configured to emit heat in response to an exothermic chemical reaction, at a postion between the exhaust gas treating body (20) and the mat member (24), and/or at a position between the mat member (24) and the casing (12), wherein
the heating element providing step provides the heating element in such a manner that the product of the chemical reaction bonds said exhaust gas treating body (20) and the mat member (24), and/or the mat member (24) and the casing (12).

13. The method according to claim 12, wherein the heating element providing step further comprises a step of providing the heating element as a powder or as a layer, on at least a part of at least one of the exhaust gas treating body, the mat member, and the casing.

14. The method according to claim 13, wherein
the heating element is provided in a state bound by an organic binder.

**15.** The method according to any one of claims 12 through 14, wherein the heating element providing step further comprises:

a step of providing a first starting material on a first surface of at least one of the exhaust gas treating body, the mat member, and the casing;
a step of providing a second starting material on a second surface that comes in contact with or comes close to the first surface onto which the first starting material is provided when the exhaust gas treating apparatus is completed; and
a step of bringing the first starting material and the second starting material in contact with each other.

**16.** The method according to any one of claims 12 through 15, further comprising a step of increasing the temperature of the exhaust gas treating apparatus so that the temperature of the exhaust gas treating apparatus falls in a range of 450°C through 1000°C.

**17.** The method according to claim 16, wherein the step of increasing the temperature of the exhaust gas treating apparatus so that the temperature of the exhaust gas treating apparatus falls in a range of 450°C through 1000°C further comprises a step of causing exhaust gas to flow through the exhaust gas treating apparatus.

**18.** The method according to any one of claims 12 through 17, wherein
the exhaust gas treating body includes a catalyst carrier or an exhaust gas filter.

**Patentansprüche**

**1.** Abgas-Behandlungsvorrichtung (10), die folgendes umfasst:

einen Abgas-Behandlungskörper (20);
ein Mattenteil (24), das anorganische Fasern einschliesst, wobei das Mattenteil (24) um mindestens einen Teil einer äusseren Oberfläche des Abgas-Behandlungskörpers (20) gewickelt ist;
ein Gehäuse (12), das so gestaltet ist, dass es den Abgas-Behandlungskörper (20), um den das Mattenteil (24) gewickelt ist, beherbergt; und
ein Heizelement (80, 90), das so gestaltet ist, dass es Wärme abstrahlt, wobei das Heizelement (80, 90) an einer Position zwischen dem Abgas-Behandlungskörper (20) und dem Mattenteil (24) und/oder an einer Position zwischen dem Mattenteil (24) und dem Gehäuse (12) angeordnet ist;
wobei das Heizelement (80, 90) die Wärme in Reaktion auf eine exotherme chemische Reaktion abstrahlt und
**dadurch gekennzeichnet ist, dass**
das Wärmeelement (80, 90) in solch einer Weise bereitgestellt ist, dass das Produkt der chemischen Reaktion den Abgas-Behandlungskörper (20) und das Mattenteil (24) und/oder das Mattenteil (24) und das Gehäuse (12) verbindet.

**2.** Abgas-Behandlungsvorrichtung gemäss Anspruch 1, wobei mindestens der Abgas-Behandlungskörpr und/oder das Gehäuse in der Nähe des Heizelements, aufgrund der durch das Heizelement abgestrahlten Wärme, schmilzt.

**3.** Abgas-Behandlungsvorrichtung gemäss Anspruch 1 oder 2, wobei das Heizelement als Pulver oder als Schicht auf mindestens einem Teil des Abgas-Behandlungskörpers und/oder des Mattenteils und/oder des Gehäuses bereitgestellt ist.

**4.** Abgas-Behandlungsvorrichtung gemäss Anspruch 3, wobei das Heizelement in einem durch ein organisches Bindemittel gebundenen Zustand bereitgestellt ist.

**5.** Abgas-Behandlungsvorrichtung gemäss irgendeinem der Ansprüche 1 bis 4, wobei ein Metall oder eine Legierung und eine anorganische Verbindung als Ausgangsmaterial für die chemische Reaktion verwendet werden.

**6.** Abgas-Behandlungsvorrichtung gemäss Anspruch 5, wobei die anorganische Verbindung Eisenoxid einschliesst.

**7.** Abgas-Behandlungsvorrichtung gemäss irgendeinem der Ansprüche 1 bis 4, wobei ein erstes Metall oder eine erste Legierung und ein zweites Metall oder eine zweite Legierung als Ausgangsmaterial für die chemische Reaktion verwendet werden.

8. Abgas-Behandlungsvorrichtung gemäss irgendeinem der Ansprüche 5 bis 7, wobei mindestens ein Material, das in den Ausgangsmaterialien eingeschlossen ist, einen Schmelzpunkt aufweist, der in einen Bereich von 450 bis 1.000°C fällt.

9. Abgas-Behandlungsvorrichtung gemäss irgendeinem der Ansprüche 5 bis 8, wobei die Ausgangsmaterialien Aluminium oder eine Aluminiumlegierung einschliessen.

10. Abgas-Behandlungsvorrichtung gemäss irgendeinem der Ansprüche 1 bis 9, wobei das Produkt der chemischen Reaktion einen Schmelzpunkt von mehr als 1.000°C aufweist.

11. Abgas-Behandlungsvorrichtung gemäss irgendeinem der Ansprüche 1 bis 10, wobei der Abgas-Behandlungskörper einen Katalysatorträger oder einen Abgasfilter einschliesst.

12. Verfahren zur Herstellung einer Abgas-Behandlungsvorrichtung (10), die einen Abgas-Behandlungskörper (20) und ein Mattenteil (24), das anorganische Fasern einschliesst, wobei das Mattenteil (24) um mindestens einen Teil einer äusseren Oberfläche des Abgas-Behandlungskörpers (20) gewickelt ist, und ein Gehäuse umfasst, das so gestaltet ist, dass es den Abgas-Behandlungskörper (20), um den das Mattenteil (24) gewickelt ist, beherbergt, wobei das Verfahren folgende Schritte umfasst:

   einen Heizelement (80, 90)-Bereitstellungsschritt, der ein Heizelement (80, 90) an einer Position zwischen dem Abgas-Behandlungskörper (20) und dem Mattenteil (24) und/oder an einer Position zwischen dem Mattenteil (24) und dem Gehäuse (12) bereitstellt, wobei das Heizelement (80, 90) so gestaltet ist, dass es Wärme in Reaktion auf eine exotherme chemische Reaktion abstrahlt, wobei
   der Heizelement-Bereitstellungsschritt das Heizelement in einer solchen Weise bereitstellt, dass das Produkt der chemischen Reaktion den Abgas-Behandlungskörper (20) und das Mattenteil (24) und/oder das Mattenteil (24) und das Gehäuse (12) verbindet.

13. Verfahren gemäss Anspruch 12, wobei der Heizelement-Bereitstellungsschritt weiterhin einen Schritt umfasst, der das Heizelement als Pulver oder als Schicht auf mindestens einem Teil des Abgas-Behandlungskörpers und/oder des Mattenteils und/oder des Gehäuses bereitstellt.

14. Verfahren gemäss Anspruch 13, wobei das Heizelement in einem durch ein organisches Bindemittel gebundenen Zustand bereitgestellt wird.

15. Verfahren gemäss irgendeinem der Ansprüche 12 bis 14, wobei der Heizelement-Bereitstellungsschritt weiterhin folgendes umfasst:

   einen Schritt, bei dem ein erstes Ausgangsmaterial auf einer ersten Oberfläche des Abgas-Behandlungskörpers und/oder des Mattenteils und/oder des Gehäuses bereitgestellt wird;
   einen Schritt des Bereitstellens eines zweiten Ausgangsmaterials auf einer zweiten Oberfläche, die in Kontakt tritt mit oder in der Nähe der ersten Oberfläche ist, auf der das erste Ausgangsmaterial bereitgestellt wird, wenn die Abgas-Behandlungsvorrichtung vervollständigt wird;
   und einen Schritt, bei dem das erste Ausgangsmaterial und das zweite Ausgangsmaterial miteinander in Kontakt gebracht werden.

16. Verfahren gemäss irgendeinem der Ansprüche 12 bis 15, das weiterhin einen Schritt der Temperaturerhöhung der Abgas-Behandlungsvorrichtung umfasst, so dass die Temperatur der Abgas-Behandlungsvorrichtung in einen Bereich von 450 bis 1.000°C fällt.

17. Verfahren gemäss Anspruch 16, wobei der Schritt der Temperaturerhöhung der Abgas-Behandlungsvorrichtung, bei dem die Temperatur der Abgas-Behandlungsvorrichtung in einen Bereich von 450 bis 1.000°C fällt, weiterhin einen Schritt umfasst, der das Strömen des Abgases durch die Abgas-Behandlungsvorrichtung verursacht.

18. Verfahren gemäss irgendeinem der Ansprüche 12 bis 17, wobei der Abgas-Behandlungskörper einen Katalysatorträger oder einen Abgasfilter einschliesst.

**Revendications**

1. Appareil (10) de traitement de gaz d'échappement comprenant :

   un corps (20) de traitement de gaz d'échappement ;
   un élément formant coussinet (24) comportant des fibres inorganiques, l'élément formant coussinet (24) étant enroulé autour d'au moins une partie d'une surface périphérique du corps (20) de traitement de gaz d'échappement ;
   un boîtier (12) configuré pour loger le corps (20) de traitement de gaz d'échappement autour duquel l'élément formant coussinet (24) est enroulé ; et
   un élément de chauffage (80, 90) configuré pour émettre de la chaleur, l'élément de chauffage (80, 90) étant prévu au niveau d'une position entre le corps (20) de traitement de gaz d'échappement et l'élément formant coussinet (24), et/ou au niveau d'une position entre l'élément formant coussinet (24) et le boîtier (12) ;
   où
   l'élément de chauffage (80, 90) émet la chaleur en réponse à une réaction chimique exothermique ; et **caractérisé en ce que**
   l'élément de chauffage (80, 90) est prévu de telle manière que le produit de la réaction chimique lie ledit corps (20) de traitement de gaz d'échappement et l'élément formant coussinet (24), et/ou l'élément formant coussinet (24) et le boîtier (12).

2. Appareil de traitement de gaz d'échappement selon la revendication 1, dans lequel
   au moins l'un du corps de traitement des gaz d'échappement et du boîtier fond à proximité de l'élément de chauffage du fait de la chaleur émise par l'élément de chauffage.

3. Appareil de traitement de gaz d'échappement selon la revendication 1 ou 2, dans lequel
   l'élément de chauffage est prévu sous forme de poudre ou sous forme de couche, sur au moins une partie d'au moins un du corps de traitement de gaz d'échappement, de l'élément formant coussinet, et du boîtier.

4. Appareil de traitement de gaz d'échappement selon la revendication 3, dans lequel
   l'élément de chauffage est prévu dans un état lié par un liant organique.

5. Appareil de traitement de gaz d'échappement selon l'une quelconque des revendications 1 à 4, dans lequel
   un métal ou un alliage, et un composé inorganique sont utilisés comme matières premières pour la réaction chimique.

6. Appareil de traitement de gaz d'échappement selon la revendication 5, dans lequel
   le composé inorganique comporte l'oxyde de fer.

7. Appareil de traitement de gaz d'échappement selon l'une quelconque des revendications 1 à 4, dans lequel
   un premier métal ou un premier alliage et un deuxième métal ou un deuxième alliage sont utilisés comme matières premières pour la réaction chimique.

8. Appareil de traitement de gaz d'échappement selon l'une quelconque des revendications 5 à 7, dans lequel
   au moins une matière comprise dans les matières premières a un point de fusion qui se trouve dans une plage de 450°C à 1000°C.

9. Appareil de traitement de gaz d'échappement selon l'une quelconque des revendications 5 à 8, dans lequel
   les matières premières comportent de l'aluminium et un alliage d'aluminium.

10. Appareil de traitement de gaz d'échappement selon l'une quelconque des revendications 1 à 9, dans lequel
    un produit de la réaction chimique a un point de fusion qui dépasse 1000°C.

11. Appareil de traitement de gaz d'échappement selon l'une quelconque des revendications 1 à 10, dans lequel
    le corps de traitement de gaz d'échappement comporte un support ou un filtre de gaz d'échappement.

12. Procédé de fabrication d'un appareil (10) de traitement de gaz d'échappement comprenant un corps (20) de traitement de gaz d'échappement, un élément formant coussinet (24) comportant des fibres inorganiques, l'élément formant coussinet (24) étant enroulé autour d'au moins une partie d'une surface périphérique du corps (20) de traitement de gaz d'échappement, et un boîtier configuré pour loger le corps (20) de traitement de gaz d'échappement autour duquel l'élément formant coussinet (24) est enroulé, le procédé comprenant :

une étape de prédisposition d'un élément de chauffage (80, 90) qui consiste à prédisposer un élément de chauffage (80, 90) configuré pour émettre de la chaleur en réponse à une réaction chimique exothermique, à une position entre le corps (20) de traitement de gaz d'échappement et l'élément formant coussinet (24), et/ou à une position entre l'élément formant coussinet (24) et le boîtier (12), où
l'étape de prédisposition de l'élément de chauffage prévoit l'élément de chauffage de telle manière que le produit de la réaction chimique lie ledit corps (20) de traitement de gaz d'échappement et l'élément formant coussinet (24), et/ou l'élément formant coussinet (24) et le boîtier (12).

13. Procédé selon la revendication 12, dans lequel l'étape de prédisposition de l'élément de chauffage comprend en outre une étape qui consiste à prédisposer l'élément de chauffage sous forme de poudre ou sous forme de couche, sur au moins une partie d'au moins un du corps de traitement de gaz d'échappement, de l'élément formant coussinet, et du boîtier.

14. Procédé selon la revendication 13, dans lequel l'élément de chauffage est prévu dans un état lié par un liant organique.

15. Procédé selon l'une quelconque des revendications 12 à 14, dans lequel l'étape de prédisposition de l'élément de chauffage comprend en outre :

une étape qui consiste à prévoir une première matière première sur une première surface d'au moins un du corps de traitement de gaz d'échappement, de l'élément formant coussinet, et du boîtier ;
une étape qui consiste à prévoir une deuxième matière première sur une deuxième surface qui entre en contact avec ou vient près de la première surface sur laquelle la première matière première est prévue lorsque l'appareil de traitement de gaz d'échappement est achevé ; et
une étape qui consiste à mettre la première matière première et la deuxième matière première en contact l'une avec l'autre.

16. Procédé selon l'une quelconque des revendications 12 à 15, comprenant en outre une étape qui consiste à augmenter la température de l'appareil de traitement de gaz d'échappement de sorte que la température de l'appareil de traitement de gaz d'échappement se trouve dans une plage de 450°C à 1000°C.

17. Procédé selon la revendication 16, dans lequel l'étape qui consiste à augmenter la température de l'appareil de traitement de gaz d'échappement de sorte que la température de l'appareil de traitement de gaz d'échappement se trouve dans une plage de 450°C à 1000°C comprend une étape qui consiste à amener le gaz d'échappement à passer à travers l'appareil de traitement de gaz d'échappement.

18. Procédé selon l'une quelconque des revendications 12 à 17, dans lequel
le corps de traitement de gaz d'échappement comporte un support ou un filtre de gaz d'échappement.

# FIG.1

# FIG.2

10

FIG.3

# FIG.4

EP 2 105 593 B1

# FIG.5

| NO. | METAL | INORGANIC COMPOUND | REACTION FORMULA | MELTING POINT OF PRODUCT |
|---|---|---|---|---|
| 1 | Al | $Fe_2O_3$ | $2Al + Fe_2O_3 \Rightarrow Al_2O_3 + 2Fe$ | 2020°C($Al_2O_3$), 1535°C (Fe) |
| 2 | Al | $TiO_2$ | $4Al + 3TiO_2 \Rightarrow 2Al_2O_3 + 3Ti$ | 2020°C($Al_2O_3$), 1668°C (Ti) |
| 3 | Al | $TiO_2$ | $13Al + 3TiO_2 \Rightarrow 2Al_2O_3 + 3Al_3Ti$ | 2020°C($Al_2O_3$), 1350°C ($Al_3Ti$) |
| 4 | Al | $Si_3N_4$ | $4Al + Si_3N_4 \Rightarrow 4AlN + 3Si$ | 2200°C(AlN), 1414°C (Si) |
| 5 | Al | TiN | $4Al + TiN \Rightarrow AlN + Al_3Ti$ | 2200°C(AlN), 1350°C ($Al_3Ti$) |
| 6 | Al | ZrN | $4Al + ZrN \Rightarrow AlN + Al_3Zr$ | 2200°C(AlN), 1610°C ($Al_3Zr$) |
| 7 | Al | HfN | $4Al + HfN \Rightarrow AlN + Al_3Hf$ | 2200°C(AlN), 1710°C ($Al_3Hf$) |
| 8 | Al | VN | $4Al + VN \Rightarrow AlN + Al_3V$ | 2200°C(AlN), 1360°C ($Al_3V$) |
| 9 | Al | NbN | $4Al + NbN \Rightarrow AlN + Al_3Nb$ | 2200°C(AlN), 1641°C ($Al_3Nb$) |
| 10 | Al | TaN | $4Al + TaN \Rightarrow AlN + Al_3Ta$ | 2200°C(AlN), 1550°C ($Al_3Ta$) |

EP 2 105 593 B1

# FIG.6

| NO. | FIRST METAL | SECOND METAL | REACTION FORMULA | MELTING POINT OF PRODUCT |
|---|---|---|---|---|
| 1 | Al | Fe | $3Al + Fe \Rightarrow Al_3Fe$ | 1145°C ($Al_3Fe$) |
| 2 | Al | Ti | $3Al + Ti \Rightarrow Al_3Ti$ | 1350°C ($Al_3Ti$) |
| 3 | Al | Ti | $Al + Ti \Rightarrow AlTi$ | 1445°C ($AlTi$) |
| 4 | Al | Ti | $Al + 3Ti \Rightarrow AlTi_3$ | 1180°C ($AlTi_3$) |
| 5 | Al | Zr | $3Al + Zr \Rightarrow Al_3Zr$ | 1610°C ($Al_3Zr$) |
| 6 | Al | Hf | $3Al + Hf \Rightarrow Al_3Hf$ | 1710°C ($Al_3Hf$) |
| 7 | Al | V | $3Al + V \Rightarrow Al_3V$ | 1360°C ($Al_3V$) |
| 8 | Al | Nb | $3Al + Nb \Rightarrow Al_3Nb$ | 1641°C ($Al_3Nb$) |
| 9 | Al | Ta | $3Al + Ta \Rightarrow Al_3Ta$ | 1550°C ($Al_3Ta$) |
| 10 | Al | Ni | $3Al + 2Ni \Rightarrow Al_3Ni_2$ | 1160°C ($Al_3Ni_2$) |
| 11 | Al | Ni | $Al + 3Ni \Rightarrow AlNi_3$ | 1385°C ($AlNi_3$) |
| 12 | Al | Ni | $Al + Ni \Rightarrow AlNi$ | 1660°C ($AlNi$) |

EP 2 105 593 B1

## FIG.7

| NO. | FIRST MATERIAL | SECOND MATERIAL | THIRD MATERIAL | REACTION FORMULA | MELTING POINT OF PRODUCT |
|---|---|---|---|---|---|
| 1 | Al | Ti | $B_4C$ | $3Al + 4Ti + B_4C \Rightarrow 2TiB_2 + TiC + Al_3Ti$ | 3220°C($TiB_2$), 3070°C($TiC$), 1390°C($Al_3Ti$) |
| 2 | Al | Ti | $Al_4C_3$ | $3Al + 14Ti + 3Al_4C_3 \Rightarrow 9TiC + 5Al_3Ti$ | 3070°C($TiC$), 1390°C($Al_3Ti$) |

# FIG.8

```
          ┌─────────────────┐
          │      START      │
          └─────────────────┘
                   │
                   ▼                    ⌐S110
┌─────────────────────────────────────────┐
│       PREPARE CASING, MAT MEMBER,        │
│     AND EXHAUST GAS TREATING  BODY       │
└─────────────────────────────────────────┘
                   │
                   ▼                    ⌐S120
┌─────────────────────────────────────────┐
│          PROVIDE FIRST STARTING          │
│        MATERIAL TO SURFACE OF            │
│         AT LEAST ONE OF  CASING,         │
│       MAT MEMBER, AND EXHAUST            │
│          GAS TREATING BODY               │
└─────────────────────────────────────────┘
                   │
                   ▼                    ⌐S130
┌─────────────────────────────────────────┐
│    PROVIDE SECOND STARTING MATERIAL      │
│   TO SURFACE THAT COMES IN  CONTACT      │
│     WITH OR COMES NEAR SURFACE           │
│      PROVIDED WITH FIRST STARTING        │
│        MATERIAL WHEN  EXHAUST GAS        │
│   TREATING APPARATUS IS COMPLETED        │
└─────────────────────────────────────────┘
                   │
                   ▼                    ⌐S140
┌─────────────────────────────────────────┐
│  HEATING ELEMENT IS FORMED AS FIRST      │
│    AND SECOND STARTING MATERIALS         │
│     COME NEAR OR CONTACT EACH            │
│  OTHER WHEN EXHAUST GAS TREATING         │
│  BODY AROUND WHICH MAT MEMBER            │
│      IS WOUND IS PUT INTO CASING         │
└─────────────────────────────────────────┘
                   │
                   ▼
          ┌─────────────────┐
          │       END       │
          └─────────────────┘
```

# FIG.9

EP 2 105 593 B1

# FIG.10

EP 2 105 593 B1

# FIG.*11*

<u>300</u>

360        320        360

350

340

340

330

325

<u>310</u>

350

325

# FIG. 12

EP 2 105 593 B1

FIG. 13

EP 2 105 593 B1

**EP 2 105 593 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2005074243 A